Europäisches Patentamt

European Patent Office

Office européen des brevets

(11) Publication number: **0 523 599 A1**

# EUROPEAN PATENT APPLICATION

(21) Application number: **92111919.4**

(22) Date of filing: **13.07.92**

(51) Int. Cl.5: **C08L 67/02**, C08L 55/02

(30) Priority: **15.07.91 JP 200057/91**

(43) Date of publication of application:
**20.01.93 Bulletin 93/03**

(84) Designated Contracting States:
**BE DE FR GB**

(71) Applicant: **MONSANTO KASEI COMPANY**
**5-2, Marunouchi 2-chome**
**Chiyoda-ku Tokyo(JP)**

(72) Inventor: **Motoshige, Ryoichi, c/o Mitsub.**
Kasei Polytec Co.
**Yokkaichi Kenkyusho, 1, Toho-cho**
**Yokkaichi-shi, Mie-ken(JP)**
Inventor: Yoshihara, Takakazu, c/o Mitsub.
Kasei Polytec Co.
**Yokkaichi Kenkyusho, 1, Toho-cho**
**Yokkaichi-shi, Mie-ken(JP)**

(74) Representative: **Wächtershäuser, Günter, Dr.**
**Tal 29**
**W-8000 München 2(DE)**

(54) Low temperature impact resistant resin composition.

(57) A low temperature impact resistant resin composition comprising the following components (A) to (C) and, if required, the following component (D), wherein the proportions of the respective components are from 20 to 80% by weight of component (A), from 0.01 to 30% by weight of component (B), from 19.99 to 79.99% by weight of component (C) and from 0 to 20% by weight of component (D):

(A) an aromatic polyester resin;
(B) a polyether ester block copolymer resin;
(C) a rubber-reinforced styrene-type
graft copolymer resin composition which is obtained by emulsion-polymerizing a styrene monomer and a vinyl cyanide monomer, and, if required, an ethylenically unsaturated monomer copolymerizable therewith, in the presence of a conjugated diene polymer latex, by the action of a polymerization initiator and which satisfies the following requirements (1) to (4):

(1) the weight average particle size of the conjugated diene polymer in the latex: from 0.20 to 1.0 $\mu$m;
(2) the weight ratio R of the conjugated diene polymer in the graft copolymer resin composition: from 0.35 to 0.80;
(3) the weight average molecular weight of the soluble component when the graft copolymer resin composition is subjected to extraction with acetone at room temperature: from 150,000 to 450,000;
(4) the graft ratio Gr defined by the following formula (F1) must satisfy the following formula (F2) defining the relation to the above weight ratio R of the conjugated diene polymer:

$$Gr = \frac{Y - X \cdot R}{X \cdot R} \times 100 \qquad (F1)$$

$$\frac{30(1-R)}{R} \leqq Gr \leqq \frac{80(1-R)}{R} \qquad (F2)$$

where X is the weight of the graft copolymer resin sample, Y is the weight of the room temperature acetone-insoluble component in X, and R is the weight ratio of the conjugated diene polymer in the graft copolymer resin composition;

(D) a copolymer comprising from 60 to 80% by weight of an aromatic vinyl monomer component, from 0 to 40% by weight of a vinyl cyanide monomer component and from 0 to 40% by weight of an ethylenically unsaturated monomer copolymerizable therewith.

The present invention relates to a low temperature impact resistant resin composition. More particularly, it relates to a low temperature impact resistant resin composition comprising an aromatic polyester resin and a rubber-reinforced styrene-type graft copolymer resin composition.

Aromatic polyester resins are usually thermoplastic resins having various excellent properties including oxidation resistance and solvent resistance. Among them, polybutyrene terephthalate (PBT) resins are particularly excellent in the above properties, and they are used for various industrial parts.

However, aromatic polyester resins usually have high crystallinity and thus have a drawback that they are poor in the impact resistance, particularly in the notched impact strength. Further, they have a drawback that they are inferior in the heat resistance under a high load or dimensional stability, as compared with styrene-type polymers as commonly employed resins.

Under the circumstances, it has been proposed to improve the impact resistance by incorporating a rubber-like material to an aromatic polyester resin. As a specific material to be incorporated, an acrylonitrile-butadiene-styrene copolymer (ABS resin) (Japanese Unexamined Patent Publication No. 25261/1976), an ethylene-acrylate copolymer or an ethylene-vinyl acetate copolymer (Japanese Unexamined Patent Publication No. 45225/1983) or an aromatic polycarbonate resin and an acryl rubber (Japanese Unexamined Patent Publication No. 25352/1983) have, for example, been proposed.

Even if such a rubber-like material as proposed, is incorporated, however, it is impossible to obtain a composition having excellent impact resistance at a low temperature.

The present applicant has previously proposed a low temperature impact resistant thermoplastic resin composition comprising as a blend component a certain specific rubber-reinforced styrene-type graft copolymer resin composition adjusted to be suitable for an aromatic polyester resin (Japanese Patent Application No. 321608/1990).

However, with such a composition, there still remains a room for further improvement of the low-temperature impact resistance.

Under these circumstances, the present inventors have conducted an extensive research to further improve the invention disclosed in Japanese Patent Application No. 321608/1990, and as a result, have found that the low temperature impact resistance can be remarkably improved when a polyether ester block copolymer resin is used as a component.

Thus, the present invention provides a low temperature impact resistant resin composition comprising the following components (A) to (C) and, if required, the following component (D), wherein the proportions of the respective components are from 20 to 80% by weight of component (A), from 0.01 to 30% by weight of component (B), from 19.99 to 79.99% by weight of component (C) and from 0 to 20% by weight of component (D):

(A) an aromatic polyester resin;

(B) a polyether ester block copolymer resin;

(C) a rubber-reinforced styrene-type

graft copolymer resin composition which is obtained by emulsion-polymerizing a styrene monomer and a vinyl cyanide monomer, and, if required, an ethylenically unsaturated monomer copolymerizable therewith, in the presence of a conjugated diene polymer latex, by the action of a polymerization initiator and which satisfies the following requirements (1) to (4):

(1) the weight average particle size of the conjugated diene polymer in the latex: from 0.20 to 1.0 $\mu$m;

(2) the weight ratio R of the conjugated diene polymer in the graft copolymer resin composition: from 0.35 to 0.80;

(3) the weight average molecular weight of the soluble component when the graft copolymer resin composition is subjected to extraction with acetone at room temperature: from 150,000 to 450,000;

(4) the graft ratio Gr defined by the following formula (F1) must satisfy the following formula (F2) defining the relation to the above weight ratio R of the conjugated diene polymer:

$$Gr = \frac{Y - X \cdot R}{X \cdot R} \times 100 \qquad (F1)$$

$$\frac{30(1-R)}{R} \leq Gr \leq \frac{80(1-R)}{R} \qquad (F2)$$

where X is the weight of the graft copolymer resin sample, Y is the weight of the room temperature acetone-insoluble component in X, and R is the weight ratio of the conjugated diene polymer in the graft copolymer resin composition;

(D) a copolymer comprising from 60 to 80% by weight of an aromatic vinyl monomer component, from 0 to 40% by weight of a vinyl cyanide monomer component and from 0 to 40% by weight of an ethylenically unsaturated monomer copolymerizable therewith.

Now, the present invention will be described in detail with reference to the preferred embodiments.

Firstly, raw material components constituting the composition of the present invention will be described.

Component (A)

Component (A) is an aromatic polyester resin.

The aromatic polyester resin is composed essentially of an aromatic dicarboxylic acid and a glycol.

A typical example of the aromatic dicarboxylic acid is terephthalic acid. However, a small amount of isophthalic acid or other aromatic dicarboxylic acid or non-aromatic dicarboxylic acid, such as naphthalene dicarboxylic acid or 1,4-cyclohexane dicarboxylic acid, may be incorporated to modify e.g. the crystallinity of the resulting polyester. On the other hand, as a glycol component, a glycol having from 2 to 10 carbon atoms, such as ethylene glycol, tetramethylene glycol, propylene glycol or isobutylene glycol, may, for example, be mentioned.

Accordingly, polyethylene terephthalate (PET) and polybutyrene terephthalate (PBT) are typical examples of component (A).

Component (B)

Component (B) is a polyether ester block copolymer.

In the present invention, the polyether ester block copolymer is preferably a block copolymer of an aromatic polyester component and an aliphatic polyether component.

The aromatic polyester component may be formed from the same materials as for the above component (A) and is preferably an aromatic polyester component comprising a dicarboxylic acid component containing at least 70 mol% of terephthalic acid and a glycol component containing at least 70 mol% of tetramethylene glycol. Dicarboxylic acids other than terephthalic acid may be aliphatic, alicyclic or aromatic dicarboxylic acids. Such dicarboxylic acids are preferably those having a molecular weight of at most 300. For example, aliphatic dicarboxylic acids such as adipic acid and sebacic acid, alicyclic dicarboxylic acids such as cyclohexane dicarboxylic acid, or aromatic dicarboxylic acids such as isophthalic acid and naphthaline dicarboxylic acid, may be mentioned.

The aliphatic polyether component may be formed by a poly(oxyalkylene)glycol. A poly(oxyalkylene)-glycol having an average molecular weight of from 400 to 6,000 is preferred. Further, a poly(oxyalkylene)-glycol in which the ratio of the number of carbon atoms to the number of oxygen atoms in the glycol, is from 2.0 to 4.3, is preferred. As such a poly(oxyalkylene)glycol, poly(tetramethylene oxide)glycol, poly-(ethylene oxide)glycol, poly(propylene oxide)glycol or copolymers thereof, may be mentioned. Particularly preferred is poly(tetramethylene oxide)glycol.

The content of the polyether component (poly(oxyalkylene)glycol) in the polyether ester block copolymer is preferably within a range of from 20 to 80% by weight, more preferably from 30 to 80% by weight.

The above polyether ester block copolymer has a nature of a thermoplastic elastomer, since it contains an aliphatic polyether component, and thus serves to synergestically improve the low temperature impact resistance of the resin composition of the present invention. And, the polyester component serves as a hard segment, and the polyether component serves as a soft segment.

Such a polyether ester block copolymer is already commercially available as a polyester thermoplastic elastomer. For example, P-type of "PELPRENE" (block copolymer of polybutyrene terephthalate and polytetramethylene glycol), a commercial product of Toyo Boseki K.K., may be mentioned. As other examples, "Hytrel", a commercial product of Du Pont and "Arnitel", a commercial product of Akzo (each of them being a block copolymer of polybutyrene terephthalate and polytetramethylene glycol), may be mentioned.

When a random copolymer obtainable by random copolymerization of monomers constituting the polyester component and the polyether component, is used, a resin composition having the desired physical properties, can not be obtained.

Component (C)

Component (C) is a rubber-reinforced styrene-type graft copolymer resin composition which is obtained by emulsion-polymerizing a styrene monomer and a vinyl cyanide monomer, and, if required, an ethylenically unsaturated monomer copolymerizable therewith, in the presence of a conjugated diene polymer latex, by the action of a polymerization initiator and which satisfies the following requirements (1) to (4):

(1) the weight average particle size of the conjugated diene polymer in the latex: from 0.20 to 1.0 $\mu$m;

(2) the weight ratio R of the conjugated diene polymer in the graft copolymer resin composition: from 0.35 to 0.80;

(3) the weight average molecular weight of the soluble component when the graft copolymer resin composition is subjected to extraction with acetone at room temperature: from 150,000 to 450,000;

(4) the graft ratio Gr defined by the following formula (F1) must satisfy the following formula (F2) defining the relation to the above weight ratio P of the conjugated diene polymer:

$$Gr = \frac{Y - X \cdot R}{X \cdot R} \times 100 \qquad (F1)$$

$$\frac{30(1-R)}{R} \leq Gr \leq \frac{80(1-R)}{R} \qquad (F2)$$

where X is the weight of the graft copolymer resin sample, Y is the weight of the room temperature acetone-insoluble component in X, and R is the weight ratio of the conjugated diene polymer in the graft copolymer resin composition.

In the above rubber-reinforced styrene-type graft copolymer resin composition, a conjugated diene polymer latex (rubber-like polymer) having a glass transition temperature of not higher than 0°C may be used, and a monomer mixture containing at least 60% by weight of a styrene-type monomer, may be used. On the other hand, the styrene-type monomer may be not only styrene but also various styrene derivatives having side chains and/or nucleus substituted by various substituents. The substituents of the styrene derivatives may, for example, be a lower alkyl group, a lower alkoxy group, a trifluoromethyl group or a halogen atom. Specific examples of the styrene derivatives include, for example, α-methylstyrene, p-methylstyrene, o-methylstyrene, m-methylstyrene and a nucleus-halogenated styrene.

As a specific example of such a rubber-reinforced styrene-type graft copolymer, an acrylonitrile-butadiene-styrene copolymer (ABS resin) obtained by graft copolymerizing styrene and acrylonitrile in the presence of butadiene rubber latex (BR) or styrene-butadiene rubber latex, a methyl methacrylate-butadiene-styrene copolymer (MBS resin) obtained by similar graft copolymerization, a methyl methacrylate•acrylonitrile-butadiene-styrene copolymer (MABS resin), an acrylonitrile-acryl rubber-styrene copolymer (AAS resin), an acrylonitrile-EPDM-styrene copolymer (AES resin), an acrylonitrile-chlorinated polystyrene-styrene copolymer (ACS resin) or a mixture thereof, may be mentioned.

Particularly preferred is a rubber-reinforced styrene-type graft copolymer resin composition comprising from 40 to 60% by weight of a rubber-like polymer component and from 60 to 40 wt% of a copolymer component (inclusive of graft chain portions) wherein the weight ratio of an aromatic vinyl monomer component/a vinyl cyanide monomer component is from 80 to 60/from 20 to 40.

Further, it is preferred that when the graft copolymer latex is to be recovered, it is coagulated by means of one of, or a combination of, an alkali metal salt, an alkaline earth metal salt and an acid, and then the resulting coagulated product is washed with cleaning water having a pH of not higher than 7.0.

The rubber-reinforced styrene-type graft copolymer resin composition has excellent impact resistance, and when mixed with other resin materials, it serves as an impact modifier (impact resistance-imparting material). The rubber-reinforced styrene-type graft copolymer resin composition is required to satisfy the above requirements (1) to (4) in order to effectively obtain the function as an impact modifier at a low temperature of the rubber-reinforced styrene-type graft copolymer resin composition, in the resin composition of the present invention.

The weight average particle size of the graft rubber within a range of from about 0.05 to 0.5 $\mu$m in requirement (1), is a weight average particle size as measured with respect to a system having the starting material rubber latex prior to the graft polymerization dispersed in water at 23°C by using Coulter[R]Nano-Sizer[TM], manufactured by Coulter Electronics Limited. The weight average particle size within a range of from 0.5 to 4 $\mu$m is a weight average particle size as measured at 23°C with respect to a solution prepared

EP 0 523 599 A1

by dissolving a small amount of the graft copolymer resin composition to dimethylformamide and adding a very small amount of potassium thiocyanide, by using Coulter Counter Model TA II, manufactured by Coulter Electronics Limited.

The weight average molecular weight (Mw) of the acetone extraction soluble component in requirement (3) is the weight average molecular weight of the above copolymer component comprising the styrene-type monomer component/the vinyl cyanide monomer component not grafted in the rubber-reinforced styrene-type graft copolymer resin composition, and it is practically measured as follows.

Firstly, the rubber-reinforced styrene-type graft copolymer resin composition is put in acetone and left to stand overnight. Then, it is subjected to a supersonic cleaning device for 15 minutes to completely dissolve a free copolymer.

Then, using a centrifugal separator, centrifugal separation is conducted at 20,000 rpm for one hour to obtain the soluble component.

Then, the soluble component is evaporated to dryness to obtain a sample, followed by preparation of a tetrahydrofuran solution and a GPC (gel permeation chromatography) measurement to obtain the molecular weight calculated as styrene.

In the present invention, the graft ratio is as defined above, but is practically measured as follows.

Firstly, the rubber-reinforced styrene-type graft copolymer resin composition is put into acetone and left to stand overnight. Then, the mixture is subjected to ultrasonic cleaning to completely dissolve the free copolymer.

Then, using a centrifugal separator, centrifugal separation is repeated twice at 20,000 rpm for one hour to obtain an insoluble component.

The graft ratio is a ratio (%) of the value obtained subtracting the rubber content (X•R) in the rubber-reinforced styrene-type graft copolymer resin composition from the dry weight (Y) of the above insoluble component, to the rubber content (X•R) in the rubber-reinforced styrene-type graft copolymer resin composition.

## Component (D)

Component (D) is a copolymer comprising from 60 to 80% by weight of an aromatic vinyl monomer, from 0 to 40% by weight of a vinyl cyanide monomer component and from 0 to 40% by weight of an ethylenically unsaturated monomer copolymerizable therewith, and it may be incorporated to the resin composition of the present invention, as the case requires.

Specific examples of the aromatic vinyl monomer component include styrene, an $\alpha$-alkylstyrene such as $\alpha$-methylstyrene, a nucleus-substituted alkyl styrene such as p-methylstyrene and vinyl naphthalene. These monomer components may be used alone or in combination as a mixture. Specific examples of the vinyl cyanide monomer component include acrylonitrile and methacrylonitrile. As the copolymerizable ethylenically unsaturated monomer, methyl methacrylate may, for example, be mentioned.

In the above copolymer, if the content of the aromatic vinyl monomer component is outside the above range, the characteristics of the copolymer, such as the heat resistance and the compatibility with other resins, are likely to change, and it is difficult to obtain a resin composition having good physical properties. Further, if the content of the vinyl cyanide monomer component exceeds 40% by weight, the physical properties of the copolymer tend to be inferior, and it is difficult to obtain the desired resin composition. A preferred content of the vinyl cyanide monomer component is at most 30% by weight. The polymerization method and the polymerization conditions for the above copolymer may suitably be selected from the conventional methods such as emulsion polymerization, suspension polymerization, solution polymerization and bulk polymerization in accordance with a known production technique for an acrylonitrile-styrene copolymer (hereinafter referred to simply as an AS resin). Further, the method may be a butch system or a continuous system.

Further, the above copolymer may be produced simultaneously in the same polymerization system as in the polymerization operation for the rubber-reinforced styrene-type graft copolymer resin composition and/or the copolymer. Otherwise, it may be produced by a separate polymerization method under separated polymerization conditions.

Now, the blend proportions of the respective components will be described.

According to the present invention, low temperature impact resistance is imparted to the aromatic polyester resin of component (A) by blending the polyether ester block copolymer resin of component (B) and the rubber-reinforced styrene-type graft copolymer resin composition of (C) thereof.

In the present invention, the proportions of the respective components are required to be from 20 to 80% by weight of component (A), from 0.01 to 30% by weight of component (B), from 19.99 to 79.99% by

6

weight of component (C) and from 0 to 20% by weight of component (D).

If the proportion of component (B) is less than 0.01% by weight, the low temperature impact resistance of the resulting resin composition and the dispersibility of the blend components tend to be inadequate. On the other hand, if it exceeds 30% by weight, the mechanical strength of the resulting resin composition tends to be inadequate, and the cost tends to be high. If the blend proportion of component (C) is less than 20% by weight, the low temperature impact resistance of the resulting resin composition and the dimensional stability of a molded product tend to be inadequate, and if it exceeds 80% by weight, the rigidity and strength of the resulting resin composition tend to be inadequate. If the blend proportion of component (D) is more than 20% by weight, the low temperature impact resistance of the resulting resin composition tends to be inadequate.

In the present invention, preferred blend proportions are from 40 to 75% by weight of component (A), from 0.1 to 25% by weight of component (B), from 25 to 60% by weight of component (C) and from 0 to 20% by weight of component (D).

The blending method may be dry blending, but melt-kneading is preferred. In accordance with a conventional mixing or kneading method, a mixture of the respective components in the form of a powder, beads, flakes or pellets, is subjected to kneading treatment using an extruder such as a single screw extruder or a twin screw extruder, or a kneader such as a Bunbary mixer, a pressure kneader or a double roll mill, to obtain the resin composition of the present invention.

To the resin composition of the present invention, resin additives and fillers of such types and amounts as not to impair the properties of the resin, may be incorporated. For example, the resin additives include, a lubricant, a releasing agent, a colorant, an antistatic agent, a flame retardant, an ultraviolet absorber, a light-resistant stabilizer, a heat-resistant stabilizer, a filler and a nucleating agent, and the fillers include fiber reinforcing agents such as glass fibers, metal fibers, carbon fibers and potassium titanate whiskers, talc, clay, calcium carbonate, mica, glass flakes, milled fibers, metal flakes and metal powders. These additives or fillers may be used alone or in combination as a mixture of two or more of them.

Now, the present invention will be described in further detail with reference to Examples. However, it should be understood that the present invention is by no means restricted to such specific Examples. In the following Examples, "parts" means "parts by weight".

The components used are as follows:

Component (A)

PBT resin (NOVADUR$^R$ 5010, manufactured by Mitsubishi Kasei Corporation)

Component (B)

Block copolymer of polybutyrene terephthalate and polytetramethylene glycol (P-type of "Pelprene" commercial product of Toyo Boseki K.K./multiblock polymer

Component (D)

Copolymer having a molecular weight of about 120,000 wherein the styrene/acrylonitrile weight ratio is 70/30.

Component (C)

Rubber-reinforced styrene type graft copolymer resin compositions obtained by the following Preparation Examples (C-1 to C-6)

(1) Preparation of graft copolymer resin composition (C)-1

Into a reactor having a capacity of 5 ℓ and equipped with a stirrer, a heating and cooling device and a supply device, the starting materials and additives in the amounts as identified in Table 1 were charged, and emulsion graft polymerization was conducted in the following manner.

Firstly, to the above reactor, 100 parts of SBR latex having a solid concentration of 50% by weight and 67 parts of deionized water were charged, and the temperature was raised to 70°C. At a temperature of 60°C during the temperature rise, 0.3 part of tetra-sodium pyrophosphate, 0.125 part of dextrose (Dex) and 0.005 part of ferrous sulfate, dissolved in 10 parts of water, were added thereto.

Then, when the temperature reached 70°C, 35 parts of styrene, 15 parts of acrylonitrile, 0.25 part of cumene hydroperoxide (CHP), 0.9 part of disproportionated potassium rosin soap and 13 parts of deionized water were added over a period of two hours and 30 minutes. After completion of the addition, the reaction was continued for further 30 minutes. Then, the mixture was cooled to terminate the reaction.

To the graft polymer latex thus obtained, 1 part of an antioxidant was added, and the mixture was added to an aqueous calcium chloride solution heated to 95°C under stirring, whereby the latex was coagulated. The coagulated product was washed with cleaning water adjusted with hydrochloric acid to pH5.0, followed by drying to obtain graft copolymer resin composition (C)-1 as white powder. The analytical values of the graft ratio and the molecular weight of the graft copolymer resin composition thus obtained are shown in Table 1.

(2) Preparation of graft copolymer resin composition (C)-2

The reaction and post treatment were conducted in the same manner as above except that SBR latex having a particle size of 0.1 $\mu$m was grown to a particle size of 0.25 $\mu$m and 0.65 $\mu$m by means of acetic anhydride and then used. The conditions and the analytical results of the graft copolymer resin composition thus obtained are shown in Table 1.

(3) Preparation of graft copolymer resin compositions (C)-3 to (C)-6

Employing the conditions as identified in Table 1, the reaction and post treatment were conducted in the same manner as above. The analytical results of the graft copolymer resin compositions thus obtained are shown in Tables 1 and 2.

8

Table 1

| | (C)-1 | (C)-2 | (C)-3 |
|---|---|---|---|
| <u>Graft copolymerization step</u> | | | |
| Particle size (μm) of rubber (1) | 0.35 | 0.35 | 0.35 |
|    Amount of solid content changed | 50 | 33 | 50 |
| Particle size (μm) of rubber (2) | – | 0.65 | – |
|    Amount of solid content changed | – | 22 | – |
| Polymerization initiator | Redox-type | Redox-type | Potassium persulfate |
|    CHP | 0.250 | 0.225 | – |
|    Dex | 0.125 | 0.113 | – |
|    KPS | – | – | 0.45 |
| Styrene | 35.0 | 31.5 | 35.0 |
| Acrylonitrile | 15.0 | 13.5 | 15.0 |
| tDM (*1) | 0.0 | 0.0 | 0.1 |
| Disproportionated potassium rosin soap | 0.9 | 0.8 | 0.9 |
| Polymerization temp. (°C) | 70 | 70 | 80 |
| Polymerization time (hr) | 3.0 | 3.0 | 3.0 |
| <u>Coaulation step</u> | | | |
|    Coagulant | $CaCl_2$ | $MgSO_4$ | $MgSO_4$ |
| <u>Water-washing step</u> | | | |
|    pH controlling agent for cleaning water | HCl | $H_3PO_4$ | $H_3PO_4$ |
|    pH value | 5.1 | 5.5 | 5.4 |
| <u>Analytical values of graft polymer</u> | | | |
|    Graft ratio (%) | 70.0 | 58.0 | 35.0 |
|    Molecular weight (x 10,000) | 25.0 | 30.0 | 26.0 |

(*1): t-dodecyl mercaptan

Table 2

| | (C)-4 | (C)-5 | (C)-6 |
|---|---|---|---|
| Graft copolymerization step | | | |
| Particle size (μm) of rubber (1) | 0.35 | 0.25 | 0.35 |
|    Amount of solid content changed | 40 | 39 | 50 |
| Particle size (μm)of rubber (2) | 0.65 | – | – |
|    Amount of solid content changed | 10 | – | – |
| Polymerization initiator | Redox-type | Potassium persulfate | Redox-type |
|    CHP | 0.250 | – | 0.250 |
|    Dex | 0.400 | – | 0.125 |
|    KPS | – | 0.83 | – |
| Styrene | 35.0 | 43.0 | 35.0 |
| Acrylonitrile | 15.0 | 18.0 | 15.0 |
| tDM (*1) | 0.6 | | 0.8 |
| Disproportionated potassium rosin soap | 0.9 | 0.7(*2) | 0.9 |
| Polymerization temp. (°C) | 70 | 80 | 70 |
| Polymerization time (hr) | 3.0 | 3.0 | 3.0 |
| Coagulation step | | | |
|    Coagulant | $MgSO_4$ | $MgSO_4$ | $CaCl_2$ |
| Water-washing step | | | |
|    pH controlling agent for cleaning water | $H_3PO_4$ | $H_3PO_4$ | HCl |
|    pH value | 5.2 | 5.2 | 5.2 |
| Analytical values of graft polymer | | | |
|    Graft ratio (%) | 50.0 | 35.0 | 20.0 |
|    Molecular weight (x 10,000) | 8.0 | 12.0 | 22.0 |

(*2): A fatty acid-type surfactant was used instead of disproportionated potassium rhodinate.

EXAMPLES 1 TO 10 AND COMPARATIVE EXAMPLES 1 TO 6

The respective components were weighed in accordance with the blend proportions (parts) as identified in Tables 3 to 5 and mixed by a tumbler. The mixture thus obtained, was kneaded while removing volatile components by means of a vented twin screw extruder to obtain pellets of a resin composition. A test piece for measuring the physical properties was molded from the above pellets by injection molding. With respect to the test piece in a completely dried state, the flexural modulus, the tensile strength, the elongation and the Izod impact strength (notched, measured at a temperature of 23°C, -20°C and -30°C) were measured, respectively, in accordance with JIS K-6871. The results are shown in Tables 3 to 5.

The units of the respective physical property values in the Tables are as follows:

Flexural modulus:     $kg/cm^2 \times 10,000$

Tensile strength:     $kg/cm^2$

Tensile elongation:     %

Izod impact strength:     kg•cm/cm

10

Table 3

| | Example Nos. | | | | | |
|---|---|---|---|---|---|---|
| | 1 | 2 | 3 | 4 | 5 | 6 |
| Blend proportions | | | | | | |
| Component A (PBT) | 55 | 59.9 | 39 | 40 | 55 | 69 |
| Component B (Perpren$^R$) | | | | | | |
| P-30B | 5 | 0.1 | 1 | 20 | 5 | 1 |
| P-40H | – | – | – | – | – | – |
| P-70B | – | – | – | – | – | – |
| P-150B | – | – | – | – | – | – |
| Component (C)-1 | 40 | – | – | – | – | – |
| Component (C)-2 | – | 40 | 40 | 40 | – | 30 |
| Component (C)-3 | – | – | – | – | 40 | – |
| Component (C)-4 | – | – | – | – | – | – |
| Component (C)-5 | – | – | – | – | – | – |
| Component (C)-6 | – | – | – | – | – | – |
| Component D (ST/AN) | – | – | – | – | – | – |
| Physical properties | | | | | | |
| Flexural modulus | 1.34 | 1.27 | 1.29 | 0.59 | 1.25 | 1.56 |
| Tensile strength | 340 | 315 | 333 | 239 | 312 | 382 |
| Tensile elongation | – | – | – | 200 | 230 | – |
| Izod impact strength | | | | | | |
| 23°C | 105 | 105 | 108 | 100 | 101 | 108 |
| -20°C | 100 | 99 | 101 | 100 | 97 | 107 |
| -30°C | 97 | 56 | 100 | 98 | 93 | 65 |

Table 4

| | Example Nos. | | | |
|---|---|---|---|---|
| | 7 | 8 | 9 | 10 |
| Blend proportions | | | | |
| Component A (PBT) | 59 | 59 | 59 | 40 |
| Component B (Perpren$^R$) | | | | − |
| P-30B | − | − | − | 20 |
| P-40H | 1 | − | − | − |
| P-70B | − | 1 | − | − |
| P-150B | − | − | 1 | − |
| Component (C)-1 | − | − | | − |
| Component (C)-2 | 40 | 40 | 40 | 30 |
| Component (C)-3 | − | − | − | − |
| Component (C)-4 | − | − | − | − |
| Component (C)-5 | − | − | − | − |
| Component (C)-6 | − | − | − | − |
| Component D (ST/AN) | − | − | − | 10 |
| Physical properties | | | | |
| Flexural modulus | 1.32 | 1.32 | 1.35 | 0.98 |
| Tensile strength | 341 | 321 | 355 | 245 |
| Tensile elongation | 280 | 250 | 180 | 260 |
| Izod impact strength | | | | |
| 23°C | 108 | 105 | 107 | 98 |
| −20°C | 101 | 101 | 106 | 90 |
| −30°C | 100 | 99 | 86 | 72 |

Table 5

| | Comparative Example Nos. | | | | | |
|---|---|---|---|---|---|---|
| | 1 | 2 | 3 | 4 | 5 | 6 |
| Blend proportions | | | | | | |
| Component A (PBT) | 55 | 59 | 55 | 20 | 60 | 40 |
| Component B (Perpren$^R$) | | | | | | |
|   P-30B | 5 | 1 | 5 | 50 | – | 10 |
|   P-40H | – | – | – | – | – | – |
|   P-70B | – | – | – | – | – | – |
|   P-150B | – | – | – | – | – | – |
| Component (C)-1 | – | – | – | – | – | – |
| Component (C)-2 | – | – | – | 30 | 40 | 20 |
| Component (C)-3 | – | – | – | – | – | – |
| Component (C)-4 | 40 | – | – | – | – | – |
| Component (C)-5 | – | 40 | – | – | – | – |
| Component (C)-6 | – | – | 40 | – | – | – |
| Component D (ST/AN) | – | – | – | – | – | 30 |
| Physical properties | | | | | | |
| Flexural modulus | 1.25 | 1.37 | 1.22 | 0.08 | 1.30 | 1.10 |
| Tensile strength | 296 | 308 | 290 | – | 331 | 352 |
| Tensile elongation | 220 | – | 210 | – | 200 | 220 |
| Izod impact strength | | | | | | |
|   23°C | 85 | 6 | 80 | 20 | 102 | 55 |
|   -20°C | 13 | 4 | 15 | 33 | 26 | 12 |
|   -30°C | 11 | 3 | 8 | 47 | 21 | 9 |

From Tables 3 to 5, the following facts are evident.

(1) The resin compositions of the present invention have high Izod impact strength even at a low temperature (see Examples 1 to 10), since they employ rubber-reinforced styrene-type graft copolymer resin compositions prepared to be suitable for other blend resin components. Whereas, in a case where a rubber-reinforced styrene-type graft copolymer resin composition not satisfying the requirements prescribed by the present invention, is used, the Izod impact strength at a low temperature is poor, and in some cases, the Izod impact strength at room temperature is also poor (see Comparative Examples 1 to 3).

(2) The resin compositions of the present invention are excellent in the balance of the mechanical strength and moldability represented by the flexural modulus, the tensile strength, the tensile elongation and the Izod impact strength (see Examples 1 to 8), since suitable amounts of various resins are blended. Whereas, the resin compositions of the Comparative Examples have a drawback that they are poor in such a balance and inferior in at least one of the physical properties (see Comparative Examples 1 to 6).

As described in the foregoing, according to the present invention, the following remarkable effects can be obtained, and thus the industrial value of the present invention is significant.

(1) The resin composition of the present invention has an unexpectedly high level of low temperature impact strength and is useful as a molding material in various fields.

(2) The resin composition of the present invention has the characteristic properties of various resins, since it is a blend of suitable amounts of such various resins, and in particular, it presents a molded product having excellent chemical resistance and low moisture absorption.

(3) The resin composition of the present invention provides excellent moldability, since it is a blend of the most suitable amounts of various resins.

**Claims**

13

1. A low temperature impact resistant resin composition comprising the following components (A) to (C) and, if required, the following component (D), wherein the proportions of the respective components are from 20 to 80% by weight of component (A), from 0.01 to 30% by weight of component (B), from 19.99 to 79.99% by weight of component (C) and from 0 to 20% by weight of component (D):

(A) an aromatic polyester resin;

(B) a polyether ester block copolymer resin;

(C) a rubber-reinforced styrene-type

graft copolymer resin composition which is obtained by emulsion-polymerizing a styrene monomer and a vinyl cyanide monomer, and, if required, an ethylenically unsaturated monomer copolymerizable therewith, in the presence of a conjugated diene polymer latex, by the action of a polymerization initiator and which satisfies the following requirements (1) to (4):

(1) the weight average particle size of the conjugated diene polymer in the latex: from 0.20 to 1.0 μm;

(2) the weight ratio R of the conjugated diene polymer in the graft copolymer resin composition: from 0.35 to 0.80;

(3) the weight average molecular weight of the soluble component when the graft copolymer resin composition is subjected to extraction with acetone at room temperature: from 150,000 to 450,000;

(4) the graft ratio Gr defined by the following formula (F1) must satisfy the following formula (F2) defining the relation to the above weight ratio R of the conjugated diene polymer:

$$Gr = \frac{Y - X \cdot R}{X \cdot R} \times 100 \qquad (F1)$$

$$\frac{30(1-R)}{R} \leqq Gr \leqq \frac{80(1-R)}{R} \qquad (F2)$$

where X is the weight of the graft copolymer resin sample, Y is the weight of the room temperature acetone-insoluble component in X, and R is the weight ratio of the conjugated diene polymer in the graft copolymer resin composition;

(D) a copolymer comprising from 60 to 80% by weight of an aromatic vinyl monomer component, from 0 to 40% by weight of a vinyl cyanide monomer component and from 0 to 40% by weight of an ethylenically unsaturated monomer copolymerizable therewith.

2. The low temperature impact resistant resin composition according to Claim 1, wherein component (C) is a graft copolymer resin composition obtained by coagulating the graft copolymer latex for its recovery by means of one of, or a combination of, an alkali metal salt, an alkaline earth metal salt and an acid, and washing the coagulated product thereby obtained, with cleaning water having a pH of not higher than 7.0.

3. The low temperature impact resistant resin composition according to Claim 1, wherein the aromatic polyester resin of component (A) is composed essentially of an aromatic dicarboxylic acid and a glycol.

4. The low temperature impact resistant resin composition according to Claim 1, wherein the aromatic polyester resin of component (A) is polyethylene terephthalate or polybutylene terephthalate.

5. The low temperature impact resistant resin composition according to Claim 1, wherein the polyether ester block copolymer resin of component (B) is a block copolymer comprising an aromatic polyester component and an aliphatic polyether component.

6. The low temperature impact resistant resin composition according to Claim 5, wherein the content of the polyether component in the polyether ester block copolymer is within a range of from 20 to 80% by weight.

7. The low temperature impact resistant resin composition according to Claim 1, wherein the polyether ester block copolymer resin component (B) is a block copolymer of polybutylene terephthalate and polytetramethylene glycol.

8. The low temperature impact resistant composition according to Claim 1, wherein the rubber-reinforced styrene-type graft copolymer resin composition of component (C) is an acrylonitrile-butadiene-styrene copolymer, a methyl methacrylate-butadiene-styrene copolymer, a methyl methacrylate-acrylonitrile-butadiene-styrene copolymer, an acrylonitrile-acryl rubber-styrene copolymer, an acrylonitrile-EPDM-styrene copolymer, an acrylonitrile-chlorinated polystyrene-styrene copolymer, or a mixture thereof.

9. The low temperature impact resistant resin composition according to Claim 1, wherein component (C) is a rubber-reinforced styrene-type graft copolymer resin composition comprising from 40 to 60% by weight of a rubber-like polymer component and from 60 to 40% by weight of a copolymer component with a weight ratio of an aromatic vinyl monomer component/a vinyl cyanide monomer component being from 80 to 60/from 20 to 40.

10. The low temperature impact resistant resin composition according to Claim 1, wherein the aromatic vinyl monomer component of the copolymer of component (D) is styrene, an $\alpha$-alkylstyrene, a nucleus-substituted styrene, vinyl naphthalene, or a mixture thereof; the vinyl cyanide monomer component of the copolymer of component (D) is acrylonitrile or methacrylonitrile; and the ethylenically unsaturated copolymerizable monomer for the copolymer of component (D) is methyl methacrylate.

## European Patent Office

## EUROPEAN SEARCH REPORT

Application Number

EP 92 11 1919

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 248 352 (AUSIMONT S.P.A) <br> * page 2, line 51 - page 3, line 4; claims 1-7 * <br> --- | 1-9 | C08L67/02 <br> C08L55/02 |
| X | DATABASE WPIL <br> Section Ch, Week 8222, <br> Derwent Publications Ltd., London, GB; <br> Class A23, AN 82-44425E <br> & JP-A-5 706 548 (HASHIMOTO) <br> * abstract * <br> ----- | 1-9 | |
| | | | TECHNICAL FIELDS SEARCHED (Int. Cl.5) <br><br> C08L |

The present search report has been drawn up for all claims

| Place of search | Date of completion of the search | Examiner |
|---|---|---|
| THE HAGUE | 23 OCTOBER 1992 | MEULEMANS R.A.M. |